(19) Europäisches Patentamt
European Patent Office
Office européen des brevets

(11) **EP 3 775 599 B1**

(12) **EUROPEAN PATENT SPECIFICATION**

(45) Date of publication and mention of the grant of the patent:
**17.07.2024 Bulletin 2024/29**

(21) Application number: **19724500.4**

(22) Date of filing: **16.05.2019**

(51) International Patent Classification (IPC):
**F16D 65/092** (2006.01)     **F16D 66/00** (2006.01)

(52) Cooperative Patent Classification (CPC):
**F16D 66/00; F16D 65/092;** F16D 2066/001;
F16D 2066/003; F16D 2066/005

(86) International application number:
**PCT/EP2019/062680**

(87) International publication number:
**WO 2019/219845 (21.11.2019 Gazette 2019/47)**

(54) **VEHICLE BRAKING SYSTEM**

BREMSSYSTEM FÜR EIN FAHRZEUG

SYSTÈME DE FREINAGE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.05.2018 IT 201800005484
31.10.2018 US 201862753325 P**

(43) Date of publication of application:
**17.02.2021 Bulletin 2021/07**

(73) Proprietor: **ITT Italia S.r.l.
20020 Lainate (IT)**

(72) Inventors:
• **SERRA, Stefano
12032 Barge (CN) (IT)**
• **VIGNOLO, Umberto
10060 Porte (Torino) (IT)**
• **TERRANOVA, Marco
10149 Torino (IT)**
• **TRUCCONE, Paolo
10067 Vigone (Torino) (IT)**

(74) Representative: **Rapisardi, Mariacristina
Ufficio Brevetti Rapisardi S.r.l.
Via Serbelloni, 12
20122 Milano (IT)**

(56) References cited:
WO-A1-2016/038533    WO-A1-2016/189150
US-A1- 2004 238 299    US-A1- 2014 311 833
US-A1- 2017 082 164    US-A1- 2018 106 319

## Description

This application claims the benefit of priority to U.S. Provisional Patent Application No. 62/753,325, filed on October 31, 2018, and to Italian Patent Application No. 102018000005484, filed on May 17, 2017.

The following invention relates to a smart braking device, especially but not necessarily for vehicles, of the type comprising real-time detecting sensors for detecting data relating to temperatures and/or static loads and/or dynamic loads and/or braking torque and/or residual braking torque and/or wear of the pad itself.

A Smart Pad is a sensorized brake pad configured (e.g., with appropriate software and hardware system architecture and some algorithms) to measure one or more parameters, such as the brake pad temperature. In some embodiments, the Smart Pad can measure static and dynamic quantities and/or can provide a real time wear level associated to life prediction (pad residual life and when the brake pad is in need of replacement). The Smart Pad can have a diagnostic scope (information and safety), both for wear and temperature. For instance, in normal driving conditions the temperature monitoring can quickly detect a brake system malfunction such as a partially blocked caliper, as due to an unwanted continuous braking that leads in the end to serious damage or anomaly in emissions and pads wear to the braking system. SPWS, in fact, having a wireless transmitter on board sends data directly to external device (e.g., Smartphone, Tablet, advanced on-board wireless devices, etc...) or to a customized receiver which broadcast information to external device. Furthermore, the Smart Pad wireless System can also measure and communicate to the end users the residual drag and the brake torque.

The Smart Pad can include a wireless sensor, thereby forming a Smart Pad Wireless System (SPWS). Having a wireless transmitter on board the brake pad can enable the data to be sent directly from the brake pad to external device (e.g. Smartphone, Tablet, advanced on-board wireless devices, the vehicle on-board computer, etc.) or to a customized receiver which in turn broadcasts the data to an external device. In some implementations, the Smart Pad Wireless System can be configured to measure and communicate to the end users the residual drag and the brake torque.

This data collected by the smart pad sensors may be sent to a data processing unit, which is connected to a transmission unit for transmitting the processed data to a central unit on-board the vehicle. These connections may be carried out by a physical component, such as for example, electric cables, which while protected inside the vehicle, are subject to significant temperature variations or to material wear caused by the continual movement of the suspension. Further, electrical fields caused by on-board services and users can produce significant variations in the transmission and reading of the data, and when considering the very small quantities or magnitudes of the electrical signals detected by the smart pad system, the full efficiency of the system may be hampered. The environmental electromagnetic interference can also contribute significantly to further decreasing the efficiency of the system, given also the relevant length of the electric cables that connect the smart pad to the processing unit.

Document US 2014/311833 A1 discloses a sensorized brake pad for a vehicle.

The technical task described in the present invention is, therefore, to obviate such limitations The technical task according to the present invention are achieved by providing a vehicle braking device according to claim 1.

The analog conditioning unit may also be referred to as an analog conditioning stage. The analog/digital conversion unit may also be referred to as an analog/digital converter. The data processing unit may also be referred to as a data processor. The transmission unit may also be referred to as a transmitter.

Some of the value propositions of the present invention are the one or more of following, or otherwise: reduce maintenance downtime & costs (System Efficiency), give alarm delivery (Increased safety), remote services (real time data) and real-time information on brake performance and maintenance (digital experience).

As provided, the electronic module can advantageously be positioned as near as possible to the braking pad so as to reduce the influence of the environmental electromagnetic noise on the efficiency of the system. Preferably said electronic module is positioned at a distance between 5 cm and 10 cm from said braking pad.

Said transmission unit preferably comprises at least a radio transmitter with at least an antenna. Said electronic module preferably comprises a microprocessor, a power unit and at least an electronic controller for controlling the power.

In an embodiment, at least a thermoelectric energy recovery unit is incorporated in said braking pad.

Said microprocessor preferably comprises at least an ASIC (Application Specific Integrated Circuit) dedicated microcircuit comprising at least a computing power measuring device and at least a memory dimensioned according to the complexity of the signal reading and conversion algorithms, at least a non-volatile memory for storing the data during said inactive state, at least an automatic power restoration system from said inactive state to said active state in a predetermined time, and at least a system for reducing energy consumption, in both said inactive state and in said active state.

The present invention is in the field of a vehicles comprising one or more braking devices.

The vehicle comprises at least an on-board receiver of the data transmitted by said transmission unit, configured to transmit data to a receiver unit outside the vehicle and/or to the on-board networks of the vehicle. Said receiver preferably implements a management protocol of the communication priorities with a plurality of said braking devices.

In an embodiment, the thermal decoupler comprises a cable having a plurality of electrical wires, the cable electrically connecting the electronic processor unit to the electrical terminals.

In an embodiment, the thermal decoupler comprises a plate supporting the electrical circuit, wherein the electrical circuit comprises electrically conductive tracks positioned on the plate.

In an embodiment, the thermal decoupler positions the electronic processor unit a distance of at least 5 cm from the brake pad.

In an embodiment, the thermal decoupler is configured to be disconnectable from the electronic processor unit.

In an embodiment, an end of the thermal decoupler is connected to the brake pad by at least one of welding, soldering or bonding.

In an embodiment, the electronic processor unit further comprises a housing that contains the analog conditioning stage, analog to digital converter, data processor, and transmitter.

In an embodiment, the force sensor comprises a shear force sensor.

In an embodiment, the force sensor comprises a normal force sensor.

In an embodiment, the force sensor comprises a piezoceramic sensor.

In an embodiment, the force sensor is configured to generate an electrical charge signal converted by a resistor in the electrical circuit into an electric voltage signal, and wherein the data processor comprises a digital integrator configured to integrate the signals.

In an embodiment, the brake pad further comprises a temperature sensor.

In an embodiment, the thermal decoupler is configured to position the electronic processor unit a distance away from the brake pad such that the electronic processor unit operates at a temperature that is less than an operational temperature of the brake pad.

Various embodiments are depicted in the accompanying drawings for illustrative purposes, and should in no way be interpreted as limiting the scope of this invention.

FIG. 1 schematically illustrates the braking device for a wheel of a vehicle;

FIG. 1a schematically illustrates the braking device with the smart friction braking pad in section, equipped with a wireless type system;

FIG. 2a illustrates a first wireless-type communication possibility;

FIG. 2b illustrates a second wireless-type communication possibility;

FIG. 3 a illustrates a first embodiment of a braking pad of the braking device;

FIG. 3b illustrates a second embodiment of a braking pad of the braking device;

FIG. 4 illustrates the signal shape of the shear sensor and the system activation threshold;

FIG. 5 is a diagram of a first event activation case

FIG. 6 illustrates the raw signal shape and the data acquisition range;

FIG. 7 is a diagram of a second event activation case;

FIG. 8 is a diagram of a third event activation case;

FIG. 9 illustrates the trend over the detecting period as a function of the normalized temperature of the pad;

FIG. 10 is a schematic example of a superposing of time activation with event activation; and

FIG. 11 shows the flow chart of the algorithm for evaluating the state of wear of the braking pad.

In the following detailed description, reference is made to the accompanying drawings, which form a part hereof. In the drawings, similar reference numbers typically identify similar components, unless context dictates otherwise. The illustrative embodiments described in the detailed description and drawings are not meant to be limiting.

The brake pad wear monitoring may be provided by one or more of the following types of brake pad wear indicators, or others: electric, mechanical, position sensor, electronic parking brake, and/or otherwise. In some embodiments, in the electric indicator, a wire or an electric metallic body is introduced inside the brake pad, when the friction material thickness decreases the contact between the disc and the cable closes the electric circuit by activating a warning light in the vehicle. Some cars have more than one cable inside the same pad, placed at two different depths, combining some information from the vehicle's wheel speed, mileage, etc.) are able to estimate the remaining life of the pad. In some embodiments, the mechanical indicator includes a backplate with appropriate modifications for generating noise when the friction material level arrives to the designed level (e.g., can produce scratching). In some embodiments, the position sensor indicator is used in the heavy duty vehicles, such as due to cost constraints. In some variants the position sensor measures the distance from the backplate. In some embodiments, the system has an electronic parking brake indicator and is configured to count the number of motor rotations needed to engage the rear brake pads (e.g., stepper motor or the motor that actuates the cables).

In contrast to the above systems, the smart braking device of the present invention is capable of measuring directly, communicating in real time and continuously the wear data, even the differential wear having the single contribution of the two pads in the caliper, the temperature and, eventually, residual torque and torque braking, and braking pressure.

The braking device comprises a brake or braking pad 1 comprising a support plate 21, a friction pad 20, and an electrical circuit equipped with sensors 10, 11, 13 for real-time detection of signals relating to temperatures and/or to normal forces and/or to shear forces.

The normal force and shear force sensors may comprise piezoceramic sensors, but alternatively can also be capacitive or piezoresistive sensors. The temperature sensors can be thermistors, for example PT1000, PT200 or PT100. The electrical circuit 22 has electrical terminals 24 arranged in a zone 12 for collecting the signals from said braking pad 1. The support plate 21, preferably but not necessarily made of a metal, directly supports the electrical circuit 22. The friction pad 20 is applied on the side of the support plate 21 where the electrical circuit 22 is present, the electrical circuit 22 is thus incorporated between the support plate 21 and the friction pad 20.

In some embodiments, the brake pad is provided with sensors (Piezoceramic, Piezoelectric, Capacitive, Piezoresistive, Strain Gauges or other force or deformation sensors) and it is composed mostly by four different parts: backplate (metallic support), a sensing layer on the backplate (Electronic Circuit, interconnection media and integrated force and temperature sensors), a damping layer (or Underlayer UL, as optional layer) and a Friction material layer (friction material FM). The smart braking device may include a limited number of sensors in order to limit the number of operations and the power budget of electronics to be suitable for a wireless system for an on-board application. During use, the brake pad can be capable of transmitting an electrical signal which is proportional to the braking forces applied to said braking element as a result of coming into contact with the element being braked, a braking element that is both easy to be constructed and easily usable.

In some embodiments, the brake pad is composed of at least one shear force sensor, preferably piezoceramic, a temperature sensor (e.g., a PT1000) and an interconnection unit to bring the electrical signals of the sensors externally to the pad and precisely to an analog conditioning stage and/or to the wireless system. The sensors are placed preferably onto an electrical circuit (on one side electrically isolated from the backplate and on the other from the UL (if present) and the friction material), this electrical circuit can be preferably a screen printed solution but also a PCB-like circuit installed in the backplate to be secured to the backplate (welded, glued, etc.) in order to have an embedded solution in the brake pad.

The shear sensor may have, preferably, at least 0.2 mm of thickness and made of piezoceramic material with operating temperature higher than 200°C, and the temperature sensor with a range of usage, preferable, of -50 to 600°C. The shear force sensor allows to measure wear, the residual drag (and braking torque) while the temperature sensor measures the temperature of the pad and it is used for compensation purposes for the change of signals in function of temperature.

In some embodiments, the brake pad includes a normal force sensor (preferable, < 0.3 mm of thickness and piezoceramic material with a Curie temperature higher than 200°C). This sensor can optionally be used, for example, for further control of brake/non-brake state.

This is added to measure pressure as additional information.

The electrical circuit 22 on which the sensors 10, 11, 13 are installed is in particular electrically insulated. The electrical circuit 22 has appropriately shaped branches to arrange the sensors 10, 11, 13 in discrete positions on the support plate 21. The electrical circuit 22 can be a screen-printed circuit or can be a printed circuit (PCB). As illustrated a damping layer 23 can be included, which coats the electrical circuit 22 and is interposed between the friction pad 20 and the support plate 21.

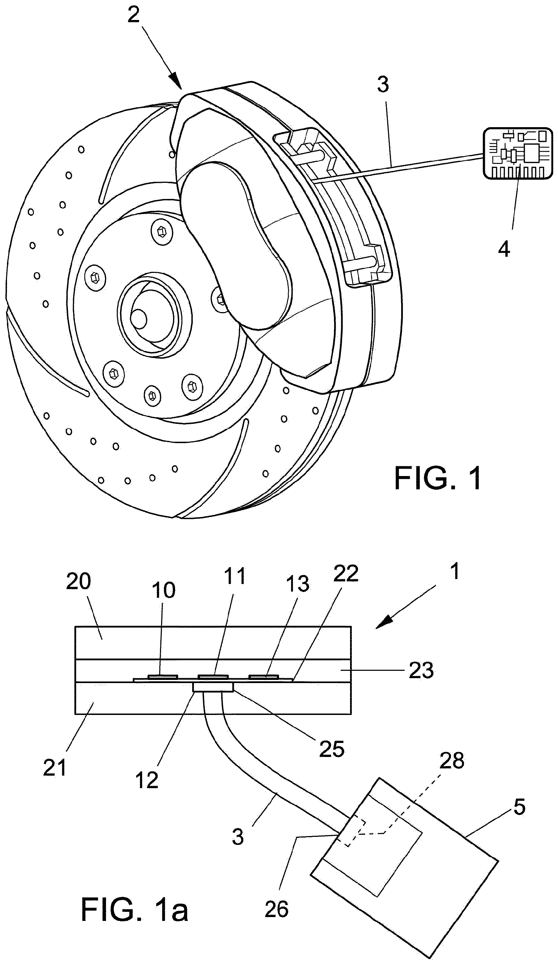

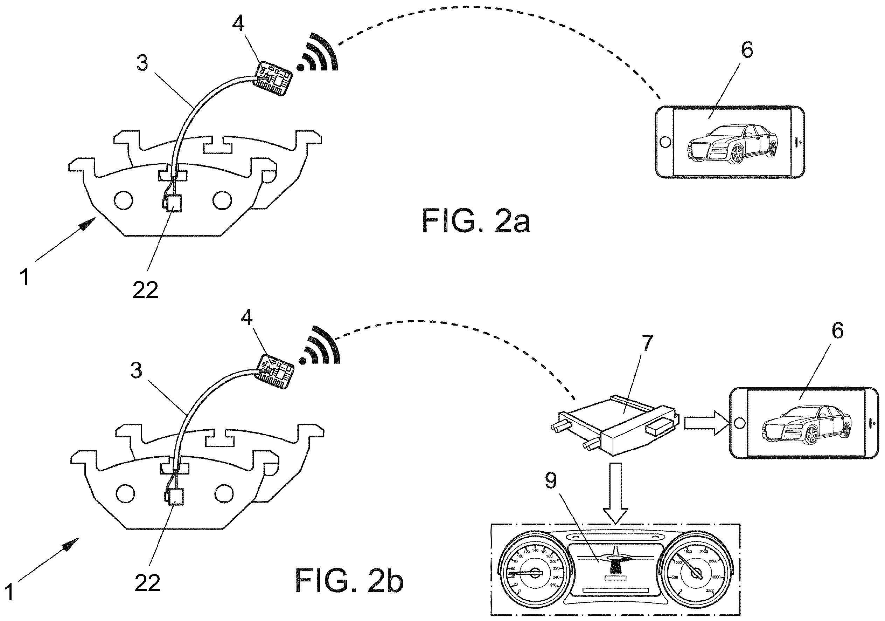

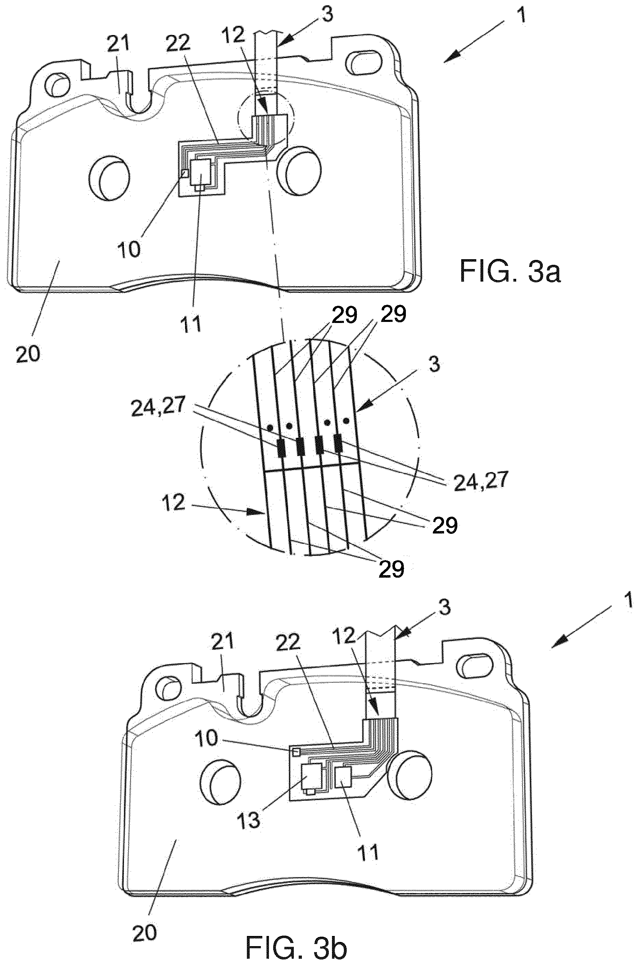

The smart pad 1, as mentioned, is provided with appropriate sensors 10, 11, 13 able in working conditions to transmit electrical signals proportional to the braking temperatures and forces applied to the braking element due to the contact with the element subject to braking: as we shall see the signals carry information relative to the temperatures and/or to the normal forces and/or to the shear forces which can be processed in order to estimate the braking torque and/or the residual braking torque and/or the wear on the braking pad 1. FIG. 3a illustrates a first embodiment of a braking pad 1, equipped with a temperature sensor 10, and a shear force sensor 11; FIG. 3b is a second embodiment of a braking pad 1, in which as well as the foregoing sensors, there is also a normal force sensor 13. With reference to FIGS. 1, 1a, 2a and 2b, the braking device is applied to the brake caliper 2 of a vehicle. In particular, at least a braking device is included for each braking caliper 2, and therefore for example a total of at least four braking devices on-board the vehicle.

A possible architecture of the smart braking device of the present invention is the following: the device or system is composed of at least one sensorized brake pad in each caliper, 4 in total in the car (up to 8 smart pad in the case of a car with all the pads sensitized) an interconnection unit (not necessarily a connector), a wireless transceiver that integrates the analog/digital conditioning and conversion stages, the processing stage, and a radio transmitter unit (with communication antenna). The radio transmitter can communicate, in a wireless condition, various information. For instance the radio transmitter can communicate the brake pad wear, temperature, and status messages. The radio transmitter can communicate directly with one or more external devices (e.g. Smartphone, Tablet, advanced on-board devices, etc.), or indirectly communicate to such to external devices such as through a customized receiver which broadcasts information to the external device. The system can include a power unit or power supply, such as a battery, with power management electronics and/or an energy harvesting solution, such as a Thermoelectric module. In some embodiments, energy harvesting may be provided from, for example, a regenerative brake principle based on a kinetic energy recover system (KERS) architecture in electric vehicle.

In some embodiments, smart braking device of the present invention is composed of a transceiver, with a transmitter and, a customized receiver for communicate directly or indirectly to external device.

The braking device advantageously comprises at least an electronic module 4 having active components which may require energy in order to function, and a thermal decoupling element 3 physically connected the electronic module 4 to the braking pad 1. The electronic module 4 may also be referred to as an electronic processor unit. The thermal decoupling element 3 may also be referred to as a thermal decoupler. The thermal decoupling element 3 advantageously has an electrical connecting means 29 of the electronic module 4 to the electrical terminals 24 of the electrical circuit 22. The thermal decoupling element 3 locates the electronic module 4 at a calibrated distance from the braking pad 1. The distance may be such that the electronic module 4 can operate at a temperature of not higher than 125°C. The electronic module 4 may include a housing 5 that contains an analog conditioning unit for conditioning the signals, an analog/digital conversion unit for converting the signals, a data processing unit for processing data from the digital signals, and a transmission unit for transmitting the data.

The thermal decoupling element 3 in particular comprises an elongate element having a proximal end 25 connected to the braking pad 1 and a distal end 26 connected to the electronic module 4. The thermal decoupling element 3 is preferably unremovably connected to the braking pad 1. The permanent physical connection of the thermal decoupling element 3 to the braking pad 1 can be realized, for example, by welding or bonding or a mechanical connection of proximal electrical terminals 27 of the electrical conductor 29 to the electrical terminals 24 of the electrical circuit 22. The thermal decoupling element 3 is disconnectably connected to said electronic module 4. For the removable physical connection of the thermal decoupling element 3 to the electronic module 4, the thermal decoupling element 3 has, for example, at the distal end thereof, a small connection block 28 engageable to the electronic module 4.

In an embodiment, the thermal decoupling element 3 is a cable resistant to high temperatures. The electrical conductor 29 are incorporated inside the cable and may comprise electric wires, cables, printed conductive traces, etc. The cable can be, for example, made of a silicon or fluoride carbon polymer-based material. In a different embodiment, the thermal decoupling element 3 is instead a plate resistant to high temperatures. The plate supports the electrical conductor 29, which can be electrically conductive tracks screen-printed on the plate. The plate can be for example made of a polyimide-based polymeric material, in particular Kapton™, or polyether ether ketone (PEEK), or of a ceramic material, for example alumina hardened with zirconia (ZTA) or of a metal material for example stainless steel. If the thermal decoupling element 3 is made of an electrically-conductive material, an electrical insulation from the electrical conductor 29 is included.

The electronic module 4 comprises a microprocessor, a power unit and at least an electronic control means for controlling the power. The power unit comprises at least an electric supply battery. Additionally or alternatively to the electric supply battery, at least an energy recovery unit of the thermoelectric type integrated in the braking pad 1 for electrical supply of the electronic module 4 may advantageously be provided. The electrical conductor 29 also connect the thermoelectric recovery unit to the electronic module 4. The electronic module 4 can however be switched from an inactive state to an active state according to a preset switching strategy so as to improve energy consumption.

The electronic module 4 comprises an analog conditioning unit for conditioning the signals, an analog/digital conversion unit for converting the signals, a data processing unit for processing data from the digital signals, and a transmission unit for transmitting the data. In a preferred embodiment, the normal force and/or shear force sensors preferably generate an electrical charge signal converted by a corresponding resistor present in the electrical circuit 22 into an electric voltage signal. In a case in which piezoceramic sensors are used, the analog conditioning unit may comprise a high-impedance circuit having a decoupling phase with a low-pass filter, for removal of the high-frequency noise.

In some embodiments, a piezoceramic sensor is used as shear force sensor, then signal is converted with a simple high impedance circuit into voltage signal. A decoupling stage with a low-pass filter, for high frequency noise removal, transforms signal bringing it to A/D converter integrated on chip. A different choice for the sensor may have a different conditioning stage, but the general architecture will be similar.

In some embodiments, a temperature sensor (PT1000 or PT100) is acquired using a simple conditioning stage, which feed the thermocouple with low current (e.g., less than or equal to about 0.3mA) and when temperature data needs to be sampled. Due to this consumption, sensor may be feed only before acquisition, and signal may be sampled after power supply transient.

In another aspect, due to the power budget requirement is linked to power-budget minimization, all components may be chosen to be compatible with micro or nano-watt power consumption, with fast wake-up time & strategies of the data processing unit. Since transmitter may be in idle state for most of its life with micro-amps of consumption, they need to be ready to acquire as soon as braking application starts (with shear or pressure sensor) or when it is needed (temperature sensor), hardware wake-up architectures need to be implemented.

The processing unit comprises a digital integrator of this electric voltage signals. The microprocessor of the electronic module 4 comprises at least an ASIC (Application Specific Integrated Circuit) dedicated microcircuit comprising at least a computing power measuring device and at least a memory dimensioned according to the complexity of the signal reading and conversion algorithms, at least a non-volatile memory for storing the data during the inactive state, at least an automatic power restoration system from the inactive state to the active state in a predetermined time, and at least a system for reducing energy consumption, in both the inactive state and the active state.

Acquired and conditioned signals may be processed by a microprocessor. In order to minimize power consumption and optimize physical layout, a dedicated ASIC (Application-Specific Integrated Circuit) chip is better to be developed. Features may include one or more of the following, or others: computation power and code memory dimension fitted on algorithm complexity; non-volatile memory for data storage during idle state switching-off; power-on-reset time shorter than 5ms; and/or low power consumption, both during idle state and normal operation.

In order to, for example, minimize power consumption, device may be switch-off for all time not used for data acquisition or data dispatch. The ASIC may be ready to acquire and elaborate data soon after wake up to use all information coming from the pad. Typically wake up times of few tens microseconds may be required to fulfill such requirements.

In some embodiments, the smart braking device may be a self-consistent system (it may work properly without external physical information) and may detect the variation in the signal coming from the pad in real-time, in order to recognize at least the start and the end of the brake application and define which algorithm apply and define the phase of its State-Machine Tree to be processed. Due the random nature of the brake application and the impulsive structure of the raw data the wake up strategy may be responsive rapidly. Activation of the system is provided by a hardware-based wake up strategy. A hardware threshold comparator is a good method to achieve the system activation. To reduce or avoid the loss of information the activation trigger can have substantially zero-delay because the peak at the start and at the end of the brake application contains most of signal information. Various embodiments are configured to adapt to the low amount of energy available to power the system. The device can remain in the idle state the most of the time (low power budget application). This can increase the device life cycle (such as a life cycle ranging from 3 to 10 years). In various embodiments, the device can stay awake for few seconds (preferably less than 2-3 seconds) after wake-up and then return to the idle state.

The transmission unit of the electronic module 4 is advantageously of a wireless type. In particular, the transmission unit of the electronic module 4 comprises at least a radio transmitter with at least an antenna. The transmission unit of the electronic module 4 may be in direct communication with an external receiver 6 or with an on-board unit 7 which transmits the data. For example, the transmission unit of the electronic module 4 may be in direct communication with a smartphone or a tablet 6, i.e. in communication with an on-board unit 7 that is appropriately predisposed which sends the information to a receiver unit outside the vehicle 8, and/or to the data network on-board the vehicle 9.

Transmission unit can integrate different parts, from signal acquisition to data transmission preferably in an ASIC or SOIC architecture. In some embodiments, the transmission unit's main operational layers are one or more of the following: analog conditioning stage; data processing stage (MPU integrated); data transmission (Wireless transceiver); and/or power supply management unit.

The consumption of electric power is an important aspect of a wireless transmission application; as the wireless smart pad is designed for a useful working life of at least 5 years, in comparison to the average working life of a braking pad, the management of power availability may require particular attention. Two main different approaches are identified: a long-life battery (lithium-ion, solid state cells or lithium-ion polymers) installed inside the transmission unit, such as, a button battery; and an energy recovery system, for example a system with a thermoelectric generator alike to energy recovery during the braking step.

Both solutions provide advantages and the choice may lie with the specific application on the basis of an evaluation of the need to manage the power against the issue of cost and working life expectancy of the application.

The braking device has a number of sensors that are compatible with the number of the detecting and calculating operations and power use for the electronic microprocessor, in accordance with the wireless communication system on-board a motor vehicle. With the aim of minimizing energy consumption, the electronic module 4 is switched off for the whole time it is not dedicated to acquiring or transmitting data. The microprocessor and the ASIC microcircuit may be ready to acquire and process the data as soon as the system enters into service, to use all the incoming information from the smart pad.

The braking device may work correctly without any external physical instruction and may recognize the change in the signal received from the sensors in real-time, with the purpose of recognizing at least the start and the end of the braking application, and choosing the appropriate algorithm calculation. For various reasons (e.g., the driver's manner of application of the brakes (which can be random) and/or the pulse nature of the raw data), it is beneficial to develop a wake up strategy of the system from the rest condition that is as reactive as possible. To reactivate the system a wake up strategy based on physical instruments is provided; a threshold comparator of the input signal is a good strategy for activating the system. To prevent loss of data, the actuator of the activation may have a delay nearly of zero given that the peaks at the start and end of the braking application contain the majority of the signal information.

A further important element to be held in consideration relates to the limited energy available for powering the system, which thus remains at rest for the majority of the time, with the aim of ensuring a useful life cycle of 3 to 10 years, on average 5 years, while it is activated for a few seconds, preferably less than 2-3 seconds after wake up.

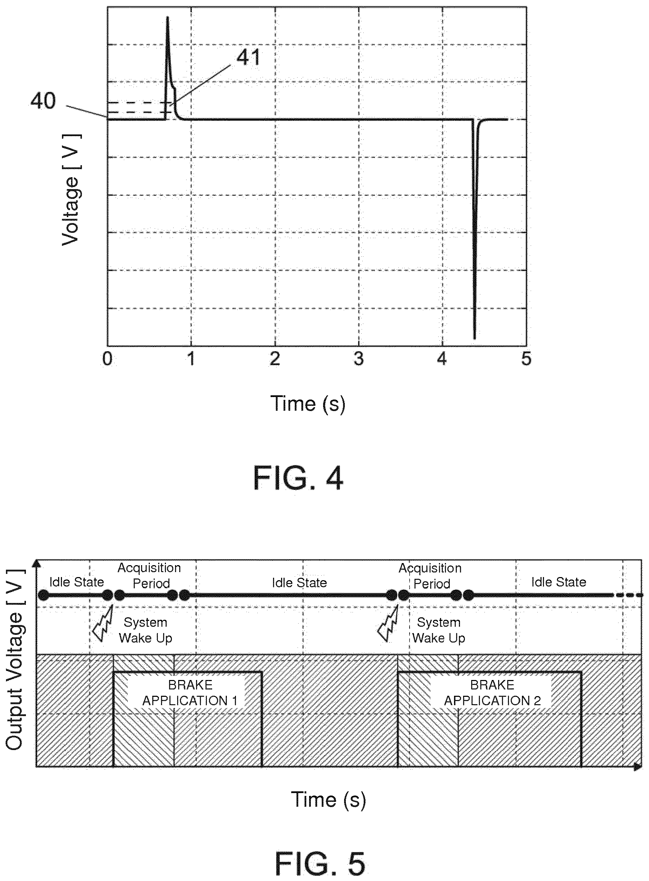

Wake up strategies of the system can be of various types. Event activation: this approach is useful as the data is acquired during the braking application when the input signal exceeds the prefixed threshold; with reference to FIG. 4, the signal coming from the force sensor has a pulse configuration that is random over time; consequently, the physical system may be able to recognize the braking application using a signal threshold 40: when the signal exceeds this value, the integrated microprocessor activates and the signal is acquired immediately after this moment, starting from the level 41.

It is possible to define different types of event activation: three different types are described in the following.

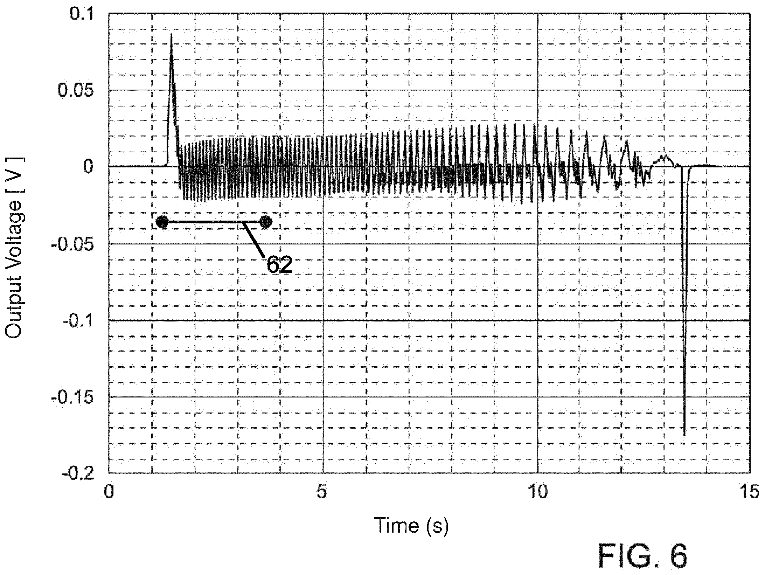

In general, in a first case this method enables a rapid identification of the signal change, but due to the pulse type of the data important information can be lost just before system activation. With reference to FIG. 5, the system is activated by physical means and remains activated for a couple of seconds for the purpose of acquiring and processing the data; following the acquisition period the system returns to rest status while waiting for a following activation event. FIG. 6 illustrates the signal coming from a braking pad and the field or data acquisition range 62 involved with the data acquisition: the physical activating means may be sensitive to positive variations of the signal with the aim of placing the system in the activation step immediately following the braking application.

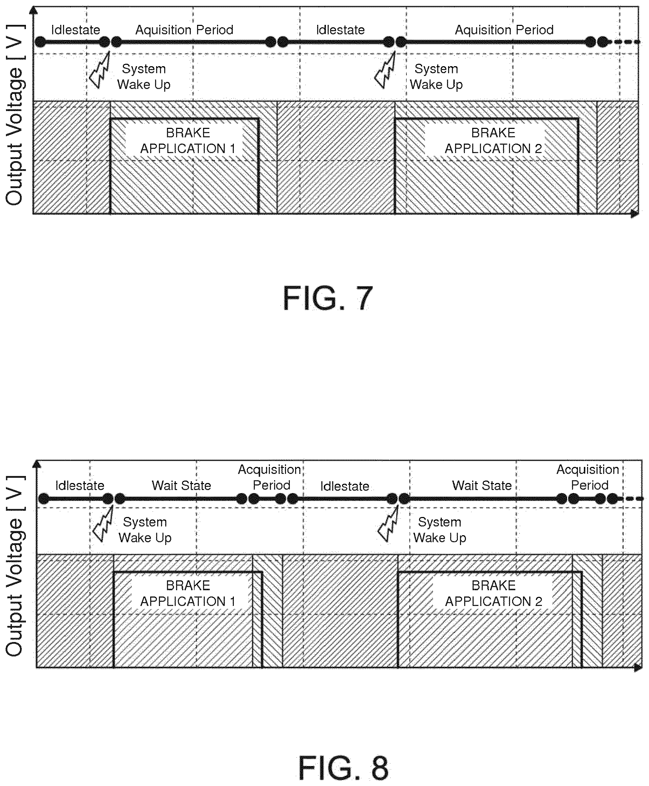

In a second case of event activation, the signal can be acquired for the entire braking application, but at the cost of a greater consumption of energy. Schematically illustrated in FIG. 7, a method is illustrated having a double signal threshold with the aim of identifying both the positive and negative variations of the signal of the smart pad. Following activation, the system remains in signal acquiring status up to when a following event occurs due to the release of the application of the brake: the detecting system of the end of braking event can be physical, through a threshold comparator, or applicative through algorithms identifying the limit or the event.

A further and third case illustrated in FIG. 8 is similar to the second case described previously, but with a lower energy consumption. Following the activation of the system it remains in lowenergy consumption status before the acquisition step, and therefore is awaiting a subsequent event activation in order to return to the limited functioning condition and the following acquisition step. The system recognizes the change in the signal due to the end of the braking application which activates the acquisition system by means of a physical threshold comparator. It is possible to define a complex activity of activation which is simply the superposing of a strategy of time activation to the strategy of event activation.

Time activation is simpler than the event activation, as it is based on a timer and does not necessarily require the presence of a physical comparator of the signal threshold in order to be able to obtain information on the braking status. Owing to the unpredictability of the braking application, some data might not be detected: also, the low frequency of the data acquisition (comprised between 0.005 and 0.100 Hz) does not guarantee the acquiring of all the events with the real risk of missing important information.

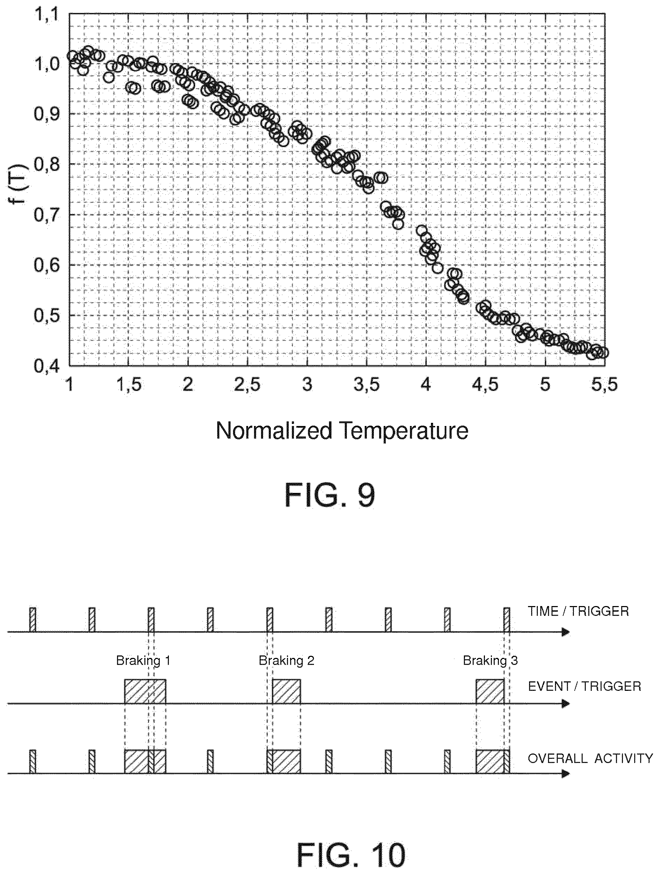

On the other hand, it is appropriate for the data acquired by the temperature sensor to be detected using a time activation strategy. Information received from the temperature sensor might be useful not only during the braking step but also periodically with the purpose of monitoring potential overheating events. Dedicated predispositions inside the microprocessor activate the system using an internal timer; the periods can be constant or connected to a value of the last detected temperature: the higher the temperature the shorter the period until the next detection, as shown in FIG. 9. This time activation strategy is useful for the control of those quantities that need to be monitored over time and in all conditions, acquired beyond the braking application and relative to physical data that is not correlated to a sudden change of the signal.

The two activation strategies described in the foregoing in a real application can work together in a complex integrated logic for system activation.

As illustrated in FIG. 10, event activation is used to identify variations in the signals, and the time activation is used for acquiring quantities which may be constantly acquired. With the aim of obtaining information from the raw data acquired by the sensors during the step of activity, various algorithms can be included. The algorithms specifically developed and dedicated may have a short execution time with the purpose of processing all the data before the system returns into the rest condition and sends the information.

Preferably, though not exclusively, the data is transmitted at the termination of the acquisition step: different transmission technologies can be used, such as preferably BLE (Bluetooth Low Energy) in the case where the receiver is a smartphone, or in the ISM band in the case of a different scenario of greater integration with the electronics on-board the vehicle. Independently of the adopted transmission technology, each electronic module sends to the receiver the data independently detected from the other.

In some embodiments, processed data could be transmitted at the end of acquisition period. Different technologies and protocols could be used in principle. If the data receiver is directly a smart phone device, BLE (Bluetooth Low Energy) technology may be adopted; In some embodiments, this could be a preferable solution for an aftermarket application, lowering the cost of the hardware and the installation complexity. In a different scenario with for instance a higher integration level with the on-board car electronics other wireless standards and technology may be adopted as preferred solution, such as ISM bands.

In some embodiments, each transmitter in the SPWS sends data independently to the receiver, which may be designed in order to be able to connect up to at least 8 Smart Pads, or implement a protocol managing communication priority between different wireless sensors.

For an on-board application, existing or custom receiver device may be designed or used (like TPMS, Tire Pressure Monitoring System, receiver units). Data can be sent using the aforementioned same BLE technologies or the ISM band. The receiver may have a part with an integrated interface and communication stack to send data on vehicle network (for example CAN bus) or other Wi-Fi protocol for intra-vehicle communication. In an on-board solution the wireless system may be profitably integrated into the pre-existing TPMS units to keep costs lower and exploits existing data receiving architectures.

The receiver is appropriately configured to be able to connect various braking devices, i.e., to implement a management protocol of the communication priorities. As for on-board applications, existing or specifically-designed receivers can be used, such as receiving units of the TPMS systems (Tire Pressure Monitoring System) integrated on the vehicle. The on-board receiver may have an integrated section in communication with the data network of the vehicle, for example a CAN bus or other Wi-Fi protocols for communication inside the vehicle.

As the parameters of the processing and calculating algorithms of the data detected by the sensors of the smart braking pad are dependent on the thickness of the pad and the sensors, and as these characteristics can vary depending on the specific model of braking pad, these parameters may be writable in the wireless transmitter of each specific smart pad at the end of the production line of the pad and on assembly of the components. Two methods for calibrating and setting up the parameters are preferably considered. A first method can include calibration of the parameters with appropriate communications and HMI interface means: this approach may require a bidirectional transmission between the smart pad and the outside; at the end of the production line the wireless transmitter is programmed for the purpose of loading the parameters of the algorithms into the microprocessor. A second method can include specific programming by production code, with prefigured parameters for each type of smart pad; at the end of the production line each specific pad is indissolubly associated to a specific transmitter with specific pre-loaded parameters.

In the following some calculating algorithms present in the processing unit will be briefly discussed.

Algorithms for Processing a Temperature

The temperature signal is acquired preferably by a Pt100 / Pt1000 and the voltage value is converted into an engineering unit using a LUT (Look Up Table). The thermocouple enables measuring temperatures between -50 °C and 600 °C. The temperature can be acquired when the system reactivates to gain diagnostic information on the status of the braking system. Temperature has two important roles in the signal processing system (SPW), one for compensation of the signal and one for selective acquisition.

Signal Compensation

The normal force and shear force sensors integrated in the braking device exhibit a behavior that is dependent on the temperature that has demanded compensation. With a functional relation f(T) between the SPW signal and the temperature, the raw data can be eliminated from the dependence on temperature. This approach can increase the likelihood that all the data can be acquired and are significant. A characterization of the braking device may be required in order to obtain the thermal behavior, such as of the type:

$$SPW_{cmp} = f(T) \times SPW_{rawdata}$$

Selective Acquisition

The temperature can be used as a threshold for discriminating the data exceeding a predefined threshold. This method enables ignoring all the data exceeding a certain temperature and saving significant data without using a compensation law which introduces a high degree of complexity. The temperature acquisition can be activated by means of a logic based on a time trigger with a variable sampling frequency. For example, when the temperature values exceed the thresholds, the sampling frequency can increase, for example on the basis of a predefined LUT, in order to have a better temporal resolution in order to accurately follow and/or report an overheating alarm indication.

Algorithms for Evaluating Torque and Pressure

As described in the foregoing the signal induced by a braking event on the circuit is transformed into two peaks, one positive and the second negative (or vice versa); the first represents the start of the braking event, the second represents the end. The height of the peak will be proportional to the applied force F and the circuit parameters involved in the electronic circuit used. Owing to the derivative nature of the preferred conditioning circuit, the evaluation of the pressure and the torque will consist in a numerical integration of the signal obtained by the sensor and the result will be directly correlated to the total load accumulated on the sensor and the variation thereof with respect to the variation of the forces.

An integral calculation is carried out to obtain an indicator of pressure/torque indicated as SPWi. Given:

$$I(t) = \int_{to}^{T} SPW_{RawData}\, dt$$

The following is true:

$$SPW_i = max \int_{to}^{T} SPW_{RawData}\, dt$$

The evaluation of the torque $\tau$ or of the pressure p is the final passage:

$$\tau = f(k_\tau, SPW_{id})$$

$$p = g(k_p, SPW_{id})$$

However a calibration procedure is beneficial to define the parameters $k_\tau$ and $k_p$ which transform the raw data into engineering units to be provided as output.

This algorithm can function correctly even in the complete braking acquisition mode to supply information in real-time on the pressure and torque variation. This approach provides complete information but with a greater consumption of energy due to the fact that the electronic module remains in the active state.

In some embodiments, after such calibration process it is possible to obtain the values k through the functional relation $f$ and $g$ between SPW and physical quantities Torque $\tau$ and pressure $p$, where $k_\tau$ and $k_p$ are the sets of calibration parameters for Torque and pressure, respectively. Furthermore this algorithm can work properly even in "full brake acquisition" in order to provide a real time information about variation in pressure and torque profile.

Algorithms for Evaluating Residual Torque

Using the SPWi indicator it is possible to carry out an estimation of the residual torque (RD), i.e., the torque value measured in the absence of braking. Experimental observation has revealed a correlation between the variations in braking torque induced by changes in the contact/noncontact conditions during the rotation of the wheel in the contact area between the braking pad and the wheel disc. Therefore an algorithm has been developed for estimating the RD based on the frequency response of the shear cut sensor as illustrated in particular in Italian Patent Application No. 102016000077944.

The indicator SPWi provides information on the RD status of the braking system; two types of use are possible:

Indicator: high-low RD level (procedure of self-calibration to define the RD levels);
RD sensor: precise RD value in an engineering unit (requested calibration procedure).

Acquisition of the residual torque can be activated using a time trigger system, as long as it is in conditions where there is no braking taking place. In this way a long sampling period can be carried out without braking applications, for example in motorway driving conditions with scarce traffic.

Algorithms for Evaluating Wear

The torque indicator ($SPW_{indicator}$ or $SPW_i$) shows a strong dependency on the consumption of material of the friction pad. The system response depends on the geometric and mechanical characteristics of the shear force sensors installed, in particular the thickness of the shear force sensor is crucial and may preferably be greater than 200 $\mu$m and preferably less than 1-2 mm. In order to use this dependency as a wear detection mechanism a physical model has been developed which explains the physical origin of the dependence and which explains the dependence in quantitative terms. In particular it is displayed a dependence on the geometric and mechanical parameters of the sensor and on the braking pad, which enables detecting the consumption of the friction pad in real-time through the analytical relation.

The torque indicator $SPW_i$ depends on the thickness h of the piezoceramic sensor, the thickness do of the friction pad in zero wear conditions and the instantaneous thickness d of the friction pad. The response is proportional to the difference between the thickness of the instantaneous wear condition and the zero wear condition, i.e. the quantity (w = do - d) of friction material consumed during the life of the braking pad.

In this case:

$$SPW_i = H(h, do, w, F_{frict})$$

where $F_{frict}$ is the shear force.

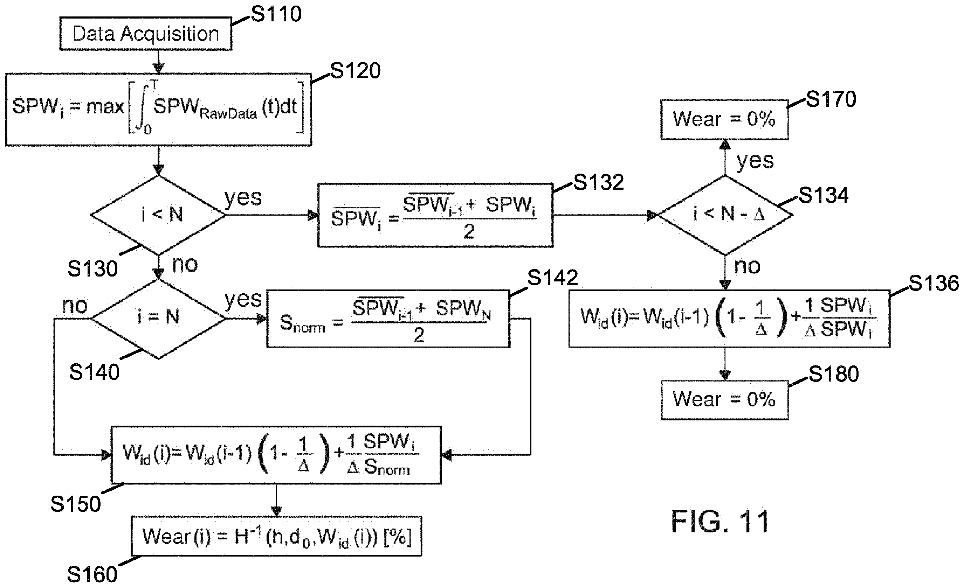

To use the torque indicator $SPW_i$ as a detection tool for the wear, an algorithm has been developed to provide a reliable and usable reading of the consumption of the braking pad during the whole working life of the braking pad. The flow chart of FIG. 11 briefly describes the algorithm and the structure. The algorithm is based on the statistical evaluation of the torque indicator $SPW_i$ on buffers with different dimensions. When the system is switched on for the first time, the algorithm performs a self-calibration process which evaluates (auto-coherently) the "zero wear condition" parameter. The self-calibration consists in an accumulation period of the brake data and the mediation thereof; this period can have a variable duration, but may be quite long (for example, at least a week) in order to provide an accurate statistical sample of braking. Following this period, with the aim of carrying out an initial estimation of the "zero wear condition" value, a mean value of this torque indicator $SPW_i$ is taken. This generating of statistically significant parameters at the start of the braking pad's working life enables an estimation of the wear from the scale factor between the initial zero value of the torque indicator $SPW_i$ and the effective mean values. In this way the system will begin to supply a percentage value of the wear, exploiting the mathematical formula obtained from the physical model which describes the dependence of the sensor outputs of the shear force on the wear, at each significant application of the brake.

The algorithm illustrated in the flow chart of FIG. 11 works in the following way.

At S120, after the data acquisition, the torque indicator $SPW_i$ is evaluated.

At S132 the zero wear condition response in the initial life of the braking pad is statistically defined.

At S136, the wear indicator in the zero wear condition $w_{id}$ response in the initial life of the pad is evaluated. The final result of the process is relative to the zero consumption condition, but the system memorizes, at each braking, a level of wear used in creating a chronology of the braking pad then exploited as a statistical base.

At S142, the self-calibration process which evaluates the "zero wear condition" parameter terminates.

At S150, the wear indicator $w_{id}$ is evaluated with an iterative algorithm based on the ratio between the effective zero value measured and the initially estimated zero value during the self-calibration process, considering the inverse of the analytical function $H(h, do, w, F_{frict})$ from the physical model developed to extract the unknown wear value $w_{id}$ from the ratio and describe the physical phenomena involved in the wear process and the dependence thereof on the variables in brackets.

At S 160, the algorithm output shows the percentage wear level as a function of the wear indicator $w_{id}$.

At the end of the traditional production line of smart braking pads, the smart pads which will become wireless undergo installation of the physical interconnecting means which indissolubly connect the collecting unit to the wireless transmitter, internally of which the typical line parameters of the specific smart pad or the production batch of said smart pads are preloaded, which enable correct operativity of the algorithms implemented.

Modifications and variations in addition to those described are naturally possible; the wireless-type smart friction pad and the braking system constituted by caliper brakes equipped with at least a wireless-type smart friction pad thus conceived are susceptible to numerous modifications and variants, all of which fall within the scope of the inventive concept; further, all details may be replaced with other technically equivalent elements. In practice the materials used, as well as the systems, can be any according to the needs and the state of the art.

Diagnostics

The described process provides a large amount of information in order to perform a brake system diagnostic (in addition to the direct use discussed above). The wear information associated to temporal/kilometric history allows the performing of a pad life prediction, which can become more accurate as the size of the acquisition history increases. Some embodiments include a temporal projection, which can be an evaluation of wear/time ratio ($\Delta w/\Delta t$). The temporal information may be acquired in two different ways, or using a built-in clock inside the microprocessor, or using a transmission/reception protocol to allow the synchronization with an external time source. Some embodiments include a kilometric projection, which can include an evaluation wear/kilometers ratio ($\Delta w/\Delta s$). The information concerning the kilometers traveled from the installation of SPW system can be supplied from external source (e.g., CAN bus). Using the wear and life prediction information is possible perform diagnostic analysis. For instance when a predefined wear threshold is met or exceeded, in association with the life prediction evaluation, the system may give a warning message in order to alert the user of the upcoming pad change. Another diagnostic use can be linked with temperature and drag information to provide information about a malfunction of the braking system. In case of exceeding preset thresholds of temperature and residual torque the system can give diagnostic information like "blocked caliper" or "caliper malfunction" or in terms of emission savings (Anomalous dust emissions or fuel emissions, energy consumptions for battery savings in EV).

Human Machine Interfaces (HMI)

In some embodiments, algorithm parameters are dependent on pad thickness and sensors and can be variable depending on the specific pad model. In certain implementations, pad thickness and/or pad model information can be written into the electronic system of the SPWS, such as at the end of production line of the pad and the assembly with the wireless components. Below are proposed two example methods for tuning the parameters. A first example is tuning parameters with appropriate communication and HMI interface. This approach can include a bidirectional transmission between the pad and the outer world. At the end of production line the wireless system will be programmed in order to load algorithms parameters inside the microprocessor. A second example is a program different code with "inline parameters" (e.g., Pre-defined partnumber for each pad typology). At the production line end the pad may be associated in a unique way to a transmitter with pre-load parameters. In this approach the pad will be linked in indissoluble way with the wireless system.

Manufacturing Production

The Smart Pad for Wireless system is a sensorized brake pad and can include one or more of: a backplate (or metallic support), sensorized layer, shock-absorbing layer (or UL Underlayer), and friction material (or friction material FM). The production process of the Smart Pad for Wireless system can be divided into two parts: Back-End Production and Front-End Production.

Back-End Production

The Back-End production process consists of processes that make from a metal backplate, a sensorized backplate. The sensorized backplate can be capable of generating electrical signals both during braking (for example wear, brake torque, temperature, etc.) and not during braking (for example, for the phenomena of residual torque or for the temperature measurement). Before depositing the state of the sensorized layer, the backplate is, if necessary, mechanically preworked through preferably fine-blanking to allow the positioning of the layer or for the possible connector/interconnection component, and cleaned through sand blasting.

The sensorized layer may be introduced to the backplate in different ways for example, as a screen printed circuit directly on the backplate or either as printed upon a Stainless Steel inox plate or, in general a thin external plate produced separately and glued, welded or mechanically fixed to become secured and placed later in the backplate. The sensors will be placed on the screen printed circuit or in the external thin support plate (glued or welded or integrated directly in the circuit, for instance screen printed sensors or 3D printed sensors).

The sensorized layer may be electrically non-conducting from both the backplate side and the UL or friction material sides, and mechanically/electrically protected (for example with resins or other materials which, in turn, are electrically non-conducting). This layer should have an interconnection unit (not necessarily a connector) to bring the electrical signals from the sensorized layer to the analog conditioning of the transmitter.

At the end of the Back-End production process there may be the end-of-line controls (In-circuit test) to verify the functioning of the sensorized backplate: they can verify the sensors functionality (for example measuring the capacitance and resistance of the sensors or, alternately, stressing them mechanically and thermally), the electrical circuit insulation with the backplate and its integrity up to the interconnection unit.

Through the presence of the interconnection mean, an end-of-line test will be allowed and beneficial for SPWS integrity test (electrical isolation with the backplate and integrity of the electrical connection from the sensorized layer to the outside).

Front-End Production

The Front-End production process can include some or all the phases subsequent to the sensorized backplate production that are integrated into the brake pad production process. The backplate can be molded with materials (UL and friction material), at the same molding conditions, the same heat treatment of a Brake Pad, then the brake pad is grinded, finished (painting and stamping, shims and clips installation) and the designed characteristics are verified (dimensions, compressibility, etc.).

In addition to the process for the brake pad production some implementations include a calibration procedure to determine the "k" parameters as explained previously, and the installation of the interconnection unit that connects the pad and the electronic wireless components. This connection unit can be a high temperature cable (preferably higher than 250 °C), or a high temperature flat cable, a strip, a screen printed circuit or a metal structure with an electrical circuit above (electrically insulated respect to the metal) which is welded, glued or mechanically connected to the interconnection unit. The finishing line and the painting line a calibration Step with a calibration machine is set to calibrate all the sensors integrated in the pad. This may test the integrity of pads after the manufacturing process and/or to set the parameters for the calibration to allow direct measurements for torque, pressure and drag.

At the end of the Front-End production process, the Interconnection unit and the transmitter become secured with the pad, forming the Smart Pad Wireless System. In some implementations, the last part of the production process consists of the end-line controls of the entire chain including the connection unit and the transmitter (the transmission part). Inside the transmitter all the "inline parameters" typical of the pad (or batch or project) can be added to allow the correct operation of the implemented algorithms.

Certain Terminology

Although certain braking devices, systems, and processes have been disclosed in the context of certain example embodiments, it will be understood by those skilled in the art that the scope of this invention extends beyond the specifically disclosed embodiments to other alternative embodiments and/or uses of the embodiments and certain modifications and equivalents thereof. Use with any structure is expressly within the scope of this invention. Various features and aspects of the disclosed embodiments can be combined with or substituted for one another in order to form varying modes of the assembly. The scope of this invention should not be limited by the particular disclosed embodiments described herein.

Certain features that are described in this invention in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as any subcombination or variation of any subcombination.

Terms of orientation used herein, such as "top," "bottom," "proximal," "distal," "longitudinal," "lateral," and "end" are used in the context of the illustrated embodiment. However, the present invention should not be limited to the illustrated orientation. Indeed, other orientations are possible and are within the scope of this invention. Terms relating to circular shapes as used herein, such as diameter or radius, should be understood not to require perfect circular structures, but rather should be applied to any suitable structure with a cross-sectional region that can be measured from side-to-side. Terms relating to shapes generally, such as "circular" or "cylindrical" or "semi-circular" or "semi-cylindrical" or any related or similar terms, are not required to conform strictly to the mathematical definitions of circles or cylinders or other structures, but can encompass structures that are reasonably close approximations.

Conditional language, such as "can," "could," "might," or "may," unless specifically stated otherwise, or otherwise understood within the context as used, is generally intended to convey that certain embodiments include or do not include, certain features, elements, and/or steps. Thus, such conditional language is not generally intended to imply that features, elements, and/or steps are in any way required for one or more embodiments.

Conjunctive language, such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

The terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. The term "generally" as used herein represents a value, amount, or characteristic that predominantly includes or tends toward a particular value, amount, or characteristic. As an example, in certain embodiments, as the context may dictate, the term "generally parallel" can refer to something that departs from exactly parallel by less than or equal to 20 degrees.

Some embodiments have been described in connection with the accompanying drawings. The figures are to scale, but such scale should not be limiting, since dimensions and proportions other than what are shown are contemplated and are within the scope of the disclosed invention. Distances, angles, etc. are merely illustrative and do not necessarily bear an exact relationship to actual dimensions and layout of the devices illustrated. Components can be added, removed, and/or rearranged. Further, the invention herein of any particular feature, aspect, method, property, characteristic, quality, attribute, element, or the like in connection with various embodiments can be used in all other embodiments set forth herein. Additionally, it will be recognized that any methods described herein may be practiced using any device suitable for performing the recited steps.

Various illustrative embodiments of braking devices, systems, and methods have been disclosed. Although the machines, systems, and methods have been disclosed in the context of those embodiments, this invention extends beyond the specifically disclosed embodiments to other alternative embodiments and/or other uses of the embodiments, as well as to certain modifications and equivalents thereof. This invention expressly contemplates that various features and aspects of the disclosed embodiments can be combined with, or substituted for, one another. Accordingly, the scope of this invention should not be limited by the particular disclosed embodiments described above, but should be determined only by a fair reading of the claims that follow.

## Claims

1. A vehicle braking system comprising:
   a brake pad (1) comprising:

   a support plate (21);
   a friction pad (20); and
   a force sensor (11, 13);
   an electrical circuit (22) comprising electrical terminals (24) arranged in a zone on the brake pad (1), the electrical terminals (24) configured to receive signals from the force sensor (11, 13);
   an electronic processor unit (4) comprising:

   an analog conditioning stage configured to condition the signals from the force sensor (11, 13); and
   an analog to digital converter configured to convert the conditioned signals to digital signals, and
   a data processor configured to process data from the digital signals; and
   a wireless transmitter configured to transmit the data; and

a power supply comprising a battery; and

a thermal decoupler (3) that physically connects the electronic processor unit to the brake pad (1) and electrically connects the electronic processor unit to the electrical terminals (24), whereby the electronic processor unit is spaced apart from the brake pad (1);

characterized that the electronic processor unit (4) is configured to switch between an inactive state to an active state according to a switching strategy; an hardware threshold comparator being provided to provide an hardware-based wake up strategy to activate the electronic processor unit (4), said hardware threshold comparator comparing the input signal having a pulse configuration that is random over time received from the force sensor to a signal threshold (40), said electronic processor unit (4) activating when the input signal exceeds this signal threshold (40) and acquiring the force signal immediately after this moment.

2. The braking system according to claim 1, wherein the thermal decoupler (3) comprises a cable having a plurality of electrical wires, the cable electrically connecting the electronic processor unit to the electrical terminals.

3. The braking system according to claim 1, wherein the thermal decoupler (3) comprises a plate supporting the electrical circuit, wherein the electrical circuit comprises electrically conductive tracks positioned on the plate.

4. The braking system according to claim 1, wherein the thermal decoupler (3) positions the electronic processor unit a distance of at least 5 cm from the brake pad.

5. The braking system according to claim 1, wherein the thermal decoupler (3) is configured to be disconnectable from the electronic processor unit.

6. The braking system according to claim 1, wherein an end of the thermal decoupler (3) is connected to the brake pad (1) by at least one of welding, soldering or bonding.

7. The braking system according to claim 1, wherein the electronic processor unit further comprises a housing that contains the analog conditioning stage, analog to digital converter, data processor, and transmitter.

8. The braking system according to claim 1, wherein the force sensor (11, 13) comprises a shear force sensor (11).

9. The braking system according to claim 1, wherein the force sensor (11, 13) comprises a normal force sensor (13).

10. The braking system according to claim 1, wherein the force sensor (11, 13) comprises a piezoceramic sensor.

11. The braking system according to claim 1, wherein the force sensor (11, 13) is configured to generate an electrical charge signal converted by a resistor in the electrical circuit into an electric voltage signal, and wherein the data processor comprises a digital integrator configured to integrate the signals.

12. The braking system according to claim 1, wherein the brake pad (1) further comprises a temperature sensor (10).

13. A vehicle braking system according to the previous claim , wherein said at least one of temperature and force sensor is configured to detect conditions of the brake pad and to output signals based on the conditions detected;

14. A vehicle braking system according to any previous claim , said electronic processor unit comprising said a power supply and a microprocessor, the electronic processor unit being configured to control power output from the power supply.

15. The braking system according to claim 14, wherein the microprocessor comprises:

non-volatile memory configured to store the data during the inactive state;
an automatic power restoration system configured to restore the electronic processor unit from the inactive state to the active state; and
an energy consumption reduction system configured to reduce energy consumption of the electronic processor unit in at least the inactive state.

16. The braking system according to claim 1, wherein the brake pad further comprises a thermoelectric energy recovery unit.

**Patentansprüche**

1. Ein Fahrzeugbremssystem umfassend:
einen Bremsbelag (1), umfassend:

eine Trägerplatte (21);
ein Reibkissen (20); und

einen Kraftsensor (11, 13);

einen elektrischen Schaltkreis (22) mit elektrischen Anschlüssen(24), die in einem Bereich auf dem Bremsbelag (1) angeordnet sind, wobei die elektrischen Anschlüsse (24) konfiguriert sind, Signale vom Kraftsensor (11, 13) zu empfangen;

eine elektronische Prozessoreinheit (4), umfassend:

eine analoge Konditionierungsstufe, konfiguriert zum Konditionieren der Signale vom Kraftsensor (11, 13);

und einen Analog-Digital-Wandler, konfiguriert zum Umwandeln der konditionierten Signale in digitale Signale, und

einen Datenprozessor, konfiguriert zur Verarbeitung von Daten aus den digitalen Signalen;

und einen drahtlosen Sender, konfiguriert zur Datenübertragung; und eine Stromversorgung umfassend eine Batterie;

und einen thermischen Entkoppler (3), der die elektronische Prozessoreinheit mit dem Bremsbelag (1) physisch verbindet und die elektronische Prozessoreinheit mit den elektrischen Anschlüssen (24) elektrisch verbindet, wobei die elektronische Prozessoreinheit von dem Bremsbelag (1) beabstandet ist;

dadurch gekennzeichnet, dass die elektronische Prozessoreinheit (4) konfiguriert ist, zwischen einem inaktiven Zustand und einem aktiven Zustand gemäß einer Umschaltstrategie zu wechseln; ein Hardware-Schwellenwertvergleicher wird bereitgestellt, um eine hardwarebasierte Weckstrategie zur Aktivierung der elektronischen Prozessoreinheit (4) bereitzustellen, wobei der Hardware-Schwellenwertvergleicher das Eingangssignal, das eine zeitlich zufällige Puls-Konfiguration aufweist, die vom Kraftsensor empfangen wird, mit einem Signalschwellenwert (40) vergleicht, wobei die elektronische Prozessoreinheit (4) aktiviert wird, wenn das Eingangssignal diesen Signalschwellenwert (40) übersteigt und unmittelbar danach das Kraftsignal erfasst.

2. Das Bremssystem nach Anspruch 1, wobei der thermische Entkoppler (3) ein Kabel umfasst, das mehrere elektrische Drähte hat, wobei das Kabel die elektronische Prozessoreinheit mit den elektrischen Anschlüssen elektrisch verbindet.

3. Das Bremssystem nach Anspruch 1, wobei der thermische Entkoppler (3) eine Platte umfasst, die den elektrischen Schaltkreis trägt, wobei der elektrische Schaltkreis elektrisch leitfähige Bahnen aufweist, die auf der Platte positioniert sind.

4. Das Bremssystem nach Anspruch 1, wobei der thermische Entkoppler (3) die elektronische Prozessoreinheit in einem Abstand von mindestens 5 cm von dem Bremsbelag positioniert.

5. Das Bremssystem nach Anspruch 1, wobei der thermische Entkoppler (3) so konfiguriert ist, dass er von der elektronischen Prozessoreinheit trennbar ist.

6. Das Bremssystem nach Anspruch 1, wobei ein Ende des thermischen Entkopplers (3) durch mindestens eine der Methoden Schweißen, Löten oder Kleben mit dem Bremsbelag (1) verbunden ist.

7. Das Bremssystem nach Anspruch 1, wobei die elektronische Prozessoreinheit weiterhin ein Gehäuse umfasst, das die analoge Konditionierungsstufe, den Analog-Digital-Wandler, den Datenprozessor und den Sender enthält.

8. Das Bremssystem nach Anspruch 1, wobei der Kraftsensor (11, 13) einen Scherkraftsensor (11) umfasst.

9. "Das Bremssystem nach Anspruch 1, wobei der Kraftsensor (11, 13) einen Normalkraftsensor (13) umfasst.

10. Das Bremssystem nach Anspruch 1, wobei der Kraftsensor (11, 13) einen piezokeramischen Sensor umfasst.

11. Das Bremssystem nach Anspruch 1, wobei der Kraftsensor (11, 13) konfiguriert ist, ein elektrisches Ladungssignal zu erzeugen, das durch einen Widerstand im elektrischen Schaltkreis in ein elektrisches Spannungssignal umgewandelt wird, und wobei der Datenprozessor einen digitalen Integrator umfasst, der konfiguriert ist, die Signale zu integrieren.

12. Das Bremssystem nach Anspruch 1, wobei der Bremsbelag (1) weiterhin einen Temperatursensor (10) umfasst.

13. Ein Fahrzeugbremssystem nach dem vorherigen Anspruch, wobei der mindestens eine Temperatur- und/oder Kraftsensor konfiguriert ist, um Zustände des Bremsbelags zu erkennen und Signale basierend auf den erkannten Zuständen auszugeben.

14. Ein Fahrzeugbremssystem nach einem der vorherigen Ansprüche, wobei die elektronische Prozessoreinheit eine Stromversorgung und einen Mikroprozessor umfasst, wobei die elektronische Prozessoreinheit konfiguriert ist, die Leistungsabgabe von der Stromversorgung zu steuern.

**15.** Das Bremssystem nach Anspruch 14, wobei der Mikroprozessor umfasst: nichtflüchtigen Speicher, konfiguriert zur Datenspeicherung während des inaktiven Zustands; ein automatisches Leistungswiederherstellungssystem, konfiguriert zur Wiederherstellung der elektronischen Prozessoreinheit vom inaktiven in den aktiven Zustand; und ein Energieverbrauchsreduktionssystem, konfiguriert zur Reduzierung des Energieverbrauchs der elektronischen Prozessoreinheit zumindest im inaktiven Zustand.

**16.** Das Bremssystem nach Anspruch 1, wobei der Bremsbelag weiterhin eine thermoelektrische Energiegewinnungseinheit umfasst.

**Revendications**

**1.** Un système de freinage de véhicule comprenant : un patin de frein (1) comprenant : une plaque de support (21) ; un tampon de friction (20) ; et un capteur de force (11, 13) ; un circuit électrique (22) comprenant des bornes électriques (24) disposées dans une zone sur le patin de frein (1), les bornes électriques (24) étant configurées pour recevoir des signaux du capteur de force (11, 13) ; une unité de processeur électronique (4) comprenant : un étage de conditionnement analogique configuré pour conditionner les signaux provenant du capteur de force (11, 13) ; et un convertisseur analogique-numérique configuré pour convertir les signaux conditionnés en signaux numériques, et un processeur de données configuré pour traiter les données issues des signaux numériques ; et un émetteur sans fil configuré pour transmettre les données ; et une alimentation comprenant une batterie ; et un découpleur thermique (3) qui relie physiquement l'unité de processeur électronique au patin de frein (1) et connecte électriquement l'unité de processeur électronique aux bornes électriques (24), l'unité de processeur électronique étant ainsi espacée du patin de frein (1) ; **caractérisé en ce que** l'unité de processeur électronique (4) est configurée pour passer d'un état inactif à un état actif selon une stratégie de commutation ; un comparateur de seuil matériel étant prévu pour fournir une stratégie de réveil basée sur le matériel pour activer l'unité de processeur électronique (4), ledit comparateur de seuil matériel comparant le signal d'entrée ayant une configuration d'impulsion aléatoire dans le temps reçu du capteur de force à un seuil de signal (40), ladite unité de processeur électronique (4) s'activant lorsque le signal d'entrée dépasse ce seuil de signal (40) et acquérant le signal de force immédiatement après ce moment.

**2.** Le système de freinage selon la revendication 1, dans lequel le découpleur thermique (3) comprend un câble ayant une pluralité de fils électriques, le câble reliant électriquement l'unité de traitement électronique aux bornes électriques.

**3.** Le système de freinage selon la revendication 1, dans lequel le découpleur thermique (3) comprend une plaque supportant le circuit électrique, le circuit électrique comprenant des pistes conductrices d'électricité positionnées sur la plaque.

**4.** Le système de freinage selon la revendication 1, dans lequel le découpleur thermique (3) positionne l'unité de traitement électronique à une distance d'au moins 5 cm de la plaquette de frein.

**5.** Le système de freinage selon la revendication 1, dans lequel le découpleur thermique (3) est configuré pour être déconnectable de l'unité de traitement électronique.

**6.** Le système de freinage selon la revendication 1, dans lequel une extrémité du découpleur thermique (3) est reliée à la plaquette de frein (1) par au moins l'un des procédés suivants : soudage, brasage ou collage.

**7.** Le système de freinage selon la revendication 1, dans lequel l'unité de traitement électronique comprend également un boîtier contenant l'étage de conditionnement analogique, le convertisseur analogique-numérique, le processeur de données et l'émetteur.

**8.** Le système de freinage selon la revendication 1, dans lequel le capteur de force (11, 13) comprend un capteur de force de cisaillement (11).

**9.** Le système de freinage selon la revendication 1, dans lequel le capteur de force (11, 13) comprend un capteur de force normale (13).

**10.** Le système de freinage selon la revendication 1, dans lequel le capteur de force (11, 13) comprend un capteur piézocéramique.

**11.** Le système de freinage selon la revendication 1, dans lequel le capteur de force (11, 13) est configuré pour générer un signal de charge électrique converti par une résistance dans le circuit électrique en un signal de tension électrique, et dans lequel le processeur de données comprend un intégrateur numérique configuré pour intégrer les signaux.

**12.** Le système de freinage selon la revendication 1, dans lequel la plaquette de frein (1) comprend également un capteur de température (10).

**13.** Un système de freinage de véhicule selon la revendication précédente, dans lequel ledit au moins un capteur de température et/ou de force est configuré pour détecter les conditions de la plaquette de frein et pour émettre des signaux basés sur les conditions détectées.

**14.** Un système de freinage de véhicule selon une quelconque des revendications précédentes, l'unité de traitement électronique comprenant une alimentation et un microprocesseur, l'unité de traitement électronique étant configurée pour contrôler la sortie de puissance de l'alimentation.

**15.** Le système de freinage selon la revendication 14, dans lequel le microprocesseur comprend : une mémoire non-volatile configurée pour stocker les données pendant l'état inactif ; un système de restauration automatique de l'alimentation configuré pour restaurer l'unité de traitement électronique de l'état inactif à l'état actif ; et un système de réduction de la consommation d'énergie configuré pour réduire la consommation d'énergie de l'unité de traitement électronique au moins dans l'état inactif.

**16.** Le système de freinage selon la revendication 1, dans lequel la plaquette de frein comprend également une unité de récupération d'énergie thermoélectrique.

**FIG. 1**

**FIG. 1a**

FIG. 2a

FIG. 2b

FIG. 3a

FIG. 3b

FIG. 4

FIG. 5

FIG. 6

EP 3 775 599 B1

FIG. 7

FIG. 8

FIG. 9

FIG. 10

EP 3 775 599 B1

S110

Data Acquisition

S120

$$SPW_i = \max\left[\int_0^T SPW_{RawData}(t)dt\right]$$

S130

$i < N$

yes

S132

$$\overline{SPW_i} = \frac{\overline{SPW_{i-1}} + SPW_i}{2}$$

S134

$i < N - \Delta$

yes

S170

Wear = 0%

no

S140

$i = N$

yes

S142

$$S_{norm} = \frac{\overline{SPW_{i-1}} + SPW_N}{2}$$

no

no

S136

$$W_{id}(i) = W_{id}(i-1)\left(1 - \frac{1}{\Delta}\right) + \frac{1}{\Delta}\frac{SPW_i}{SPW_i}$$

S180

Wear = 0%

S150

$$W_{id}(i) = W_{id}(i-1)\left(1 - \frac{1}{\Delta}\right) + \frac{1}{\Delta}\frac{SPW_i}{S_{norm}}$$

S160

$$Wear(i) = H^{-1}(h, d_0, W_{id}(i)) \ [\%]$$

FIG. 11

**EP 3 775 599 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62753325
- IT 102018000005484

- US 2014311833 A1